(19) Europäisches Patentamt
European Patent Office
Office européen des brevets

(11) **EP 2 516 101 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(21) Anmeldenummer: **10790987.1**

(22) Anmeldetag: **16.12.2010**

(51) Int Cl.:
***B23K 26/04*** *(2014.01)*

(86) Internationale Anmeldenummer:
**PCT/EP2010/069966**

(87) Internationale Veröffentlichungsnummer:
**WO 2011/085904 (21.07.2011 Gazette 2011/29)**

(54) **VERFAHREN UND VORRICHTUNG ZUR ERFASSUNG UND JUSTIERUNG DES FOKUS EINES LASERSTRAHLS BEI DER LASERBEARBEITUNG VON WERKSTÜCKEN**

METHOD AND DEVICE FOR DETECTING AND ADJUSTING THE FOCUS OF A LASER BEAM WHEN LASER MACHINING WORKPIECES

PROCEDE ET DISPOSITIF DE DETECTION ET D'ALIGNEMENT DU FOYER D'UN FAISCEAU LASER LORS DE L'USINAGE AU LASER DE PIECES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2009 DE 102009059245**

(43) Veröffentlichungstag der Anmeldung:
**31.10.2012 Patentblatt 2012/44**

(73) Patentinhaber: **LT Ultra-Precision-Technology GmbH**
**88634 Herdwangen-Schönach (DE)**

(72) Erfinder: **JURCA, Marius**
**67770 Stattmatten (FR)**

(74) Vertreter: **Charrier, Rapp & Liebau**
**Patentanwälte**
**Fuggerstrasse 20**
**86150 Augsburg (DE)**

(56) Entgegenhaltungen:
**EP-A2- 0 490 146     EP-A2- 1 908 544**
**DE-A1- 4 106 008     DE-A1- 10 056 329**
**DE-A1- 10 248 458**

## Beschreibung

Die Erfindung betrifft ein Verfahren und eine Vorrichtung zur Erfassung und Justierung des Fokus eines Laserstrahls bei der Laserbearbeitung von Werkstücken.

Bei der Bearbeitung von Werkstücken mit Laserstrahlen, wie zum Beispiel beim Laserschneiden, Laserschweißen, Laserbeschriften oder Lasergravieren, werden gegenüber dem zu bearbeitenden Werkstück bewegliche Bearbeitungsköpfe verwendet, in denen ein von einem Bearbeitungslaser emittierter Laserstrahl mittels eines optischen Systems auf die Oberfläche des Werkstücks geführt und dort in einem Bearbeitungspunkt fokussiert wird. Um eine möglichst effiziente Verfahrensführung bei der Laserstrahlbearbeitung zu gewährleisten, ist eine exakte Positionierung und Fokussierung des Laserstrahls des Bearbeitungslasers auf der Oberfläche des Werkstücks erforderlich. Hierfür ist aus der EP 1 908 544 A2 beispielsweise ein Verfahren und eine Vorrichtung zur Erfassung und Einstellung der Position eines Laserstrahls auf der Oberfläche eines zu bearbeitenden Werkstücks bekannt. Bei dem bekannten Verfahren werden zunächst die Ist-Werte der Positionierung des Laserstrahls über einen oder mehrere Strahllagedetektoren erfasst und dann mit Soll-Werten der Strahlpositionierung durch eine Verstellung des optischen Systems abgeglichen. Die Verstellung des optischen Systems erfolgt dabei beispielsweise über eine Spiegelanordnung mit einem adaptiven Spiegel.

Weiterhin sind aus dem Stand der Technik Verfahren zum Einstellen der Fokuslage eines auf ein Werkstück gerichteten Laserstrahls eines Bearbeitungslasers bekannt. So wird beispielsweise in der DE 102 48 458 B4 ein Verfahren zum Einstellen der Fokuslage eines auf ein Werkstück gerichteten Laserstrahls beschrieben, bei dem der Abstand zwischen dem Bearbeitungskopf, aus dem der Laserstrahl austritt, und der Oberfläche des Werkstücks konstant gehalten wird und im Inneren des Bearbeitungskopfes mit einem Strahlungsdetektor der Anteil einer aus einem Bereich der Wechselwirkungszone zwischen Laserstrahl und Werkstück kommenden Strahlung erfasst und eine in dem Bearbeitungskopf angeordnete Fokussieroptik so verschoben, dass ein der erfassten Strahlung entsprechendes Signal einen Maximalwert annimmt. Der Maximalwert der detektierten Strahlungsleistung ist dann erreicht, wenn die Fokuslage des Laserstrahls relativ zum Werkstück für die Bearbeitung optimal ist. Mit diesem Verfahren kann die Fokuslage des Laserstrahls des Bearbeitungslasers relativ zum Werkstück und zum Bearbeitungskopf mit hoher Genauigkeit eingestellt werden, wobei die Einstellung der Fokuslage zunächst "off-line" vor dem eigentlichen Bearbeitungsvorgang erfolgt.

Problematisch bei diesem bekannten Verfahren ist allerdings die Änderung der Fokuslage des Bearbeitungslaserstrahls während des Bearbeitungsprozesses unter der thermischen Last der Leistung des Laserstrahls und damit die Änderung des effektiven Bearbeitungspunkts (Tool Center Point, TCP). Änderungen der Lage des TCP treten in Folge einer thermischen Belastung der optischen Komponenten des Strahlführungssystems und aufgrund von thermisch hervorgerufenen Brennweitenänderungen (sogenannte "thermal lensing"-Effekte) auf. Um ein möglichst effizientes Bearbeitungsverfahren durchzuführen, müssten diese thermischen Effekte, die zu einer Änderung der Lage des effektiven Bearbeitungspunkts auf der bzw. in Bezug auf die Oberfläche des zu bearbeitenden Werkstücks führen, bei der Fokuseinstellung des Laserstrahls des Bearbeitungslasers berücksichtigt werden.

Hiervon ausgehend besteht eine Aufgabe der Erfindung darin, ein Verfahren und eine Vorrichtung zur Erfassung und Justierung des Fokus des Laserstrahls eines Bearbeitungslasers für die Laserbearbeitung von Werkstücken so auszugestalten, dass eine durch thermische Effekte hervorgerufene Änderung der Lage des effektiven Bearbeitungspunkts (TCP) bei der Fokuseinstellung berücksichtigt werden kann.

Beim Laserschneiden werden üblicherweise kapazitive Arbeitsabstandsregelungen eingesetzt, mit denen der Arbeitsabstand zwischen der Werkstückoberfläche und dem Bearbeitungskopf, aus dem der Laserstrahl des Bearbeitungslasers austritt, erfasst und auf einen optimalen Wert geregelt wird. Diese bekannten Verfahren zur Regelung des Arbeitsabstands beim Laserschneiden ermöglichen jedoch gleichfalls nur eine Erfassung und Regelung des Abstands zwischen der Werkstückoberfläche und dem Bearbeitungskopf bzw. dessen Düse, aus welcher der Laserstrahl des Bearbeitungslasers austritt. Änderungen der Lage des TCP infolge der thermischen Belastung der optischen Komponenten des Strahlführungssystems bei voller Leistung des Bearbeitungslasers können nicht erfasst und damit nicht nachgeregelt werden. Darüber hinaus verursacht eine kapazitive Abstandsmessung Probleme, wenn der Laserstrahl des Bearbeitungslasers unter einem spitzen Winkel auf die ebene Werkstückoberfläche auftrifft, da die kapazitive Abstandsmessung axial und lateral unterschiedliche Empfindlichkeiten aufweist. Im Übrigen kann eine kapazitive Abstandsmessung nur beim Bearbeiten von elektrisch leitenden Werkstücken durchgeführt werden.

Beim Laserschweißen sind kapazitive Arbeitsabstandsmessungen sehr ungenau, da die beim Laserschweißen oberhalb der Wechselwirkungszone entstehende Metalldampf-Schutzgas-Wolke die kapazitive Messung erheblich stört. Beim Laserschweißen wird nämlich in der Regel ein Schutzgas verwendet, welches koaxial als laminarer Strom mit niedrigem Druck auf die Wechselwirkungszone gerichtet wird. Über die (chemische) Zusammensetzung des Schutzgases kann der Schweißprozess beeinflusst werden. Beim Laserschweißen entsteht regelmäßig in Richtung der Bestrahlung oberhalb der Wechselwirkungszone eine zumindest teilweise ionisierte Metalldampfwolke, welche unter Umständen das Schutzgas ionisieren kann. Die dadurch entstehende ionisierte Metalldampf-Schutzgas-Wolke kann eine kapazitive Abstandsmessung erheblich stören oder in vielen Fällen sogar unmöglich machen.

Hiervon ausgehend liegt der Erfindung die weitere Aufgabe zugrunde, ein Verfahren und eine Vorrichtung für die Laserbearbeitung von Werkstücken aufzuzeigen, mit denen eine genaue Erfassung des Arbeitsabstands zwischen der Werkstückoberfläche und dem Bearbeitungskopf, aus dem der Laserstrahl des Bearbeitungslasers austritt, sowohl beim Laserschneiden als auch beim Laserschweißen zu ermöglichen.

Aufgrund unterschiedlicher Anforderungen werden in der Regel verschiedene Bearbeitungsköpfe für das Laserschneiden und für das Laserschweißen verwendet. Beim Laserschneiden ist die Leistung des Laserstrahls des Bearbeitungslasers in der Regel wesentlich kleiner als beim Laserschweißen. Andererseits muss beim Laserschneiden der Arbeitsabstand zwischen dem Bearbeitungskopf und der Werkstückoberfläche schnell nachgeregelt werden können. Um dies zu gewährleisten, müssen für das Laserschneiden spezielle Bearbeitungsköpfe mit niedrigem Gewicht verwendet werden. Um das Gewicht eines Bearbeitungskopfes für das Laserschneiden möglichst niedrig zu halten, werden Linsen für die Fokussieroptik verwendet, mit denen der Laserstrahl des Bearbeitungslasers auf die Werkstückoberfläche fokussiert wird. Dadurch wird jedoch die maximal einsetzbare Strahlleistung des Bearbeitungslasers bei vorgegebenem Strahldurchmesser begrenzt und der speziell für das Laserschneiden bereitgestellte Bearbeitungskopf mit niedrigem Gewicht kann daher nicht für das Laserschweißen verwendet werden, bei dem höhere Strahlleistungen gefordert sind. In Bearbeitungsköpfen für das Laserschweißen werden in der Regel keine Linsen, welche den hohen Strahlleistungen nicht standhalten würden, sondern Metallspiegel zur Fokussierung des Laserstrahls des Bearbeitungslasers verwendet. Eine weitere Aufgabe der Erfindung besteht daher darin, eine Vorrichtung zur Laserbearbeitung von Werkstücken aufzuzeigen, die sowohl beim Laserschneiden wie auch beim Laserschweißen eingesetzt werden kann und eine schnelle Regelung des Arbeitsabstands zwischen der Werkstückoberfläche und dem Bearbeitungskopf ermöglicht.

Die genannten Aufgaben werden mit einem Verfahren zur Erfassung und Justierung des Fokus eines Laserstrahls bei der Laserbearbeitung von Werkstücken mit den im Anspruch 1 angegebenen Verfahrensschritten gelöst. Zur Lösung der Aufgaben trägt ferner eine Vorrichtung zur Erfassung und Justierung des Fokus eines Laserstrahls bei der Laserbearbeitung von Werkstücken mit den Merkmalen des nebengeordneten Anspruchs 13 bei. Bevorzugte Ausführungsformen des Verfahrens und der Vorrichtung zur Erfassung und Justierung des Fokus eines Laserstrahls bei der Laserbearbeitung von Werkstücken sind den abhängigen Ansprüchen 2 bis 12 und 14 bis 18 zu entnehmen.

Bei dem erfindungsgemäßen Verfahren nach Anspruch 1 wird zunächst ein aus einem Bearbeitungskopf austretender Laserstrahl eines Bearbeitungslasers auf die Oberfläche des zu bearbeitenden Werkstücks geführt und dort in einen Bearbeitungspunkt (TCP) auf der oder in Bezug auf die Werkstückoberfläche fokussiert, wobei die Fokussierung mittels eines optischen Fokussierelements erfolgt. Neben dem Laserstrahl des Bearbeitungslasers wird ferner die von einer ersten Justierlichtquelle und einer zweiten Justierlichtquelle emittierte Strahlung auf die Werkstückoberfläche geführt und dort fokussiert, wobei die Wellenlängen der von den Justierlichtquellen emittierten Strahlen unterschiedlich sind. Die um den Bearbeitungspunkt herum durch Streuung und/oder Reflexion des Laserstrahls des Bearbeitungslasers an der Oberfläche des zu bearbeitenden Werkstücks entstehende elektromagnetischen Strahlung wird mittels eines optischen Systems mit einer chromatischen Aberration ausgekoppelt und zu einem ersten Detektor geführt, der die Intensität dieser Strahlung erfasst. Die um den Bearbeitungspunkt herum von der Werkstückoberfläche zurückreflektierte Strahlung der Justierlichtquellen wird ebenfalls mittels des optischen Systems mit chromatischer Abberation erfasst und die Intensitäten der zurückreflektierten Strahlung der Justierlichtquellen werden getrennt mittels wenigstens eines zweiten Detektors erfasst. Schließlich wird unter Verwendung der von den Detektoren erfassten Intensitäten die momentane Lage des Fokus des Laserstrahls des Bearbeitungslasers ermittelt und der Fokus des Laserstrahls des Bearbeitungslasers wird auf den gewünschten und für die Laserbearbeitung optimalen Bearbeitungspunkt in Bezug auf die Oberfläche des Werkstücks justiert.

Aus den Intensitäten der reflektierten Strahlung der Justierlichtquellen, welche getrennt erfasst werden können, kann der Abstand zwischen der Werkstückoberfläche und dem Bearbeitungskopf ermittelt werden. Aus der Kenntnis des Abstands zwischen der Werkstückoberfläche und dem Bearbeitungskopf einerseits und der exakten momentanen Lage des Fokus des Laserstrahls des Bearbeitungslasers ist es möglich, den Fokus des Bearbeitungslaserstrahls auf einen gewünschten und für die Laserbearbeitung des Werkstücks optimalen Bearbeitungspunkt in Bezug auf die Werkstückoberfläche zu justieren, wobei insbesondere durch thermische Effekte hervorgerufene Änderungen der Brennweite des optischen Strahlführungssystems berücksichtigt werden können. Je nach Anwendungsfall kann es dabei zweckmäßig sein, den Fokus des Bearbeitungslaserstrahls exakt auf die Werkstückoberfläche oder auf einen unterhalb der Werkstückoberfläche im Inneren des Werkstücks liegenden Bearbeitungspunkt (TCP) zu fokussieren. Da die momentane Lage des Fokus des Bearbeitungslaserstrahls während des Bearbeitungsprozesses "on-line" erfolgt, werden die thermischen Effekte, die zu einer Brennweitenänderung des optischen Systems und damit zu einer thermisch bedingten Änderung der Lage des effektiven Bearbeitungspunkts (TCP) führen, mit berücksichtigt. Das erfindungsgemäße Verfahren ermöglicht daher bei laufendem Bearbeitungsprozess, also "on-line", eine exakte Justierung sowie eine gegebenenfalls erforderliche Nachregelung des Fokus des Bearbeitungslaserstrahls auf die optimale Lage des Bearbeitungspunkts (TCP) in Bezug auf die Werkstückoberfläche.

Die erfindungsgemäße Vorrichtung nach Anspruch 13 umfasst eine optische Einrichtung zur Zuführung und Fokussierung eines von einem Bearbeitungslaser emittierten Laserstrahls, wobei die optische Einrichtung ein in einem Bearbeitungskopf angeordnetes Fokussierelement umfasst, welches den Laserstrahl des Bearbeitungslasers in einen Bearbeitungspunkt auf oder in Bezug auf die Oberfläche des zu bearbeitenden Werkstücks fokussiert, sowie wenigstens eine erste Justierlichtquelle und eine zweite Justierlichtquelle, welche Strahlung unterschiedlicher Wellenlänge emittieren, sowie eine optische Einrichtung zur Zuführung und Fokussierung der von den Justierlichtquellen emittierten Strahlung auf die Oberfläche des zu bearbeitenden Werkstücks. Die Vorrichtung umfasst ferner eine erste optische Auskoppeleinrichtung zum Auskoppeln der um den Bearbeitungspunkt herum durch Streuung und/oder Reflexion des Laserstrahls des Bearbeitungslasers an der Werkstückoberfläche entstehenden elektromagnetischen Strahlung, wobei die erste optische Auskoppeleinrichtung eine chromatische Abberation aufweist. Weiterhin umfasst die erfindungsgemäße Vorrichtung einen ersten Detektor zur Erfassung der Intensität der mittels der Auskoppeleinrichtung auf diesen Detektor gerichteten elektromagnetischen Strahlung, welche um den Bearbeitungspunkt herum durch Streuung und/oder Reflexion des Laserstrahls des Bearbeitungslasers an der Werkstückoberfläche entstanden ist. Die Vorrichtung umfasst weiterhin eine zweite optische Auskoppeleinrichtung zum Auskoppeln der von der Oberfläche des Werkstücks um den Bearbeitungspunkt herum zurückreflektierten Strahlung der Justierlichtquellen, wobei die zweite Auskoppeleinrichtung ebenfalls eine chromatische Abberation aufweist. Die Vorrichtung umfasst weiterhin wenigstens einen zweiten Detektor zum Erfassen der Intensitäten der von der Werkstückoberfläche reflektierten Strahlung der Justierlichtquellen sowie eine Auswerteeinrichtung zur Ermittlung der momentanen Lage des Fokus des Bearbeitungslaserstrahls unter Verwendung der mit den Detektoren erfassten Intensitäten sowie eine Justiereinrichtung zur Justierung des Fokus des Bearbeitungslaserstrahls auf einen gewünschten Bearbeitungspunkt in Bezug auf die Werkstückoberfläche.

Die erfindungsgemäße Vorrichtung ermöglicht es, den Fokus des Bearbeitungslaserstrahls auf einen für die jeweilige Bearbeitung des Werkstücks optimale Lage des Bearbeitungspunkts in Bezug auf die Oberfläche des Werkstücks zu justieren. Die Justierung kann dabei während des Bearbeitungsprozesses, also "on-line" durchgeführt werden, so dass zu jeder Zeit während des Bearbeitungsprozesses eine Justierung des Fokus des Bearbeitungslaserstrahls auf den optimalen Bearbeitungspunkt in Bezug auf die Werkstückoberfläche und unter Berücksichtigung von insbesondere thermisch bedingten Verschiebungen der Brennweite des Strahlführungssystems gewährleistet werden kann.

Im Folgenden wird die Erfindung anhand eines Ausführungsbeispiels unter Bezugnahme auf die begleitenden Zeichnungen näher erläutert. Die Zeichnungen zeigen:

Fig. 1:  Schematische Darstellung einer Einrichtung zur Laserbearbeitung von Werkstücken mit einer erfindungsgemäßen Vorrichtung zur Erfassung und Justierung des Fokus des Laserstrahls des Bearbeitungslasers;

Fig. 2:  Schematische Darstellung des Bearbeitungskopf der Einrichtung von Figur 1 mit einer an den Bearbeitungskopf gekoppelten Sende- und Empfangseinheit zur Durchführung des erfindungsgemäßen Verfahrens;

Fig. 3:  Darstellung der Emissionsspektren des Laserstrahls des Bearbeitungslasers und der von den Justierlichtquellen der erfindungsgemäßen Vorrichtung emittierten Strahlung (Fig. 3a) sowie der von den Detektoren der erfindungsgemäßen Vorrichtung empfangenen Intensitäten des Laserstrahls des Bearbeitungslasers und der Justierlichtquellen (Fig. 3b);

Fig. 4:  Schematische Darstellung einer alternativen Ausführungsform der erfindungsgemäßen Vorrichtung mit einem Scraper-Spiegel zur Auskopplung der von der Werkstückoberfläche reflektierten Strahlung des Bearbeitungslasers und der Justierlichtquellen;

Fig. 5:  Eine bevorzugte Ausführungsform des in der Einrichtung von Figur 1 verwendeten Strahlteilers.

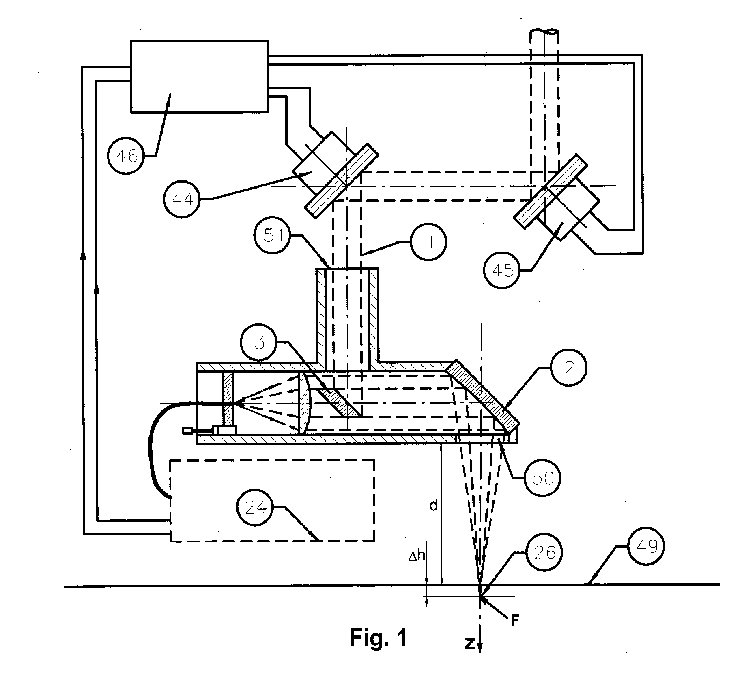

Die in der Figur 1 schematisch gezeigte Einrichtung zur Laserbearbeitung von Werkstücken umfasst einen hier zeichnerisch nicht dargestellten Bearbeitungslaser, welcher einen Laserstrahl 1 emittiert. Bei dem Bearbeitungslaser kann es sich bspw. um einen $CO_2$-Laser handeln, dessen Emissionsspektrum im NIR-Spektralbereich liegt. Es können jedoch auch andere Hochleistungslaser verwendet werden, die auch in anderen Spektralbereichen emittieren. Der vom Bearbeitungslaser emittierte Laserstrahl 1 wird über zwei Spiegel 44, 45 in einen Bearbeitungskopf 48 umgelenkt. Bei den beiden Umlenkspiegeln 44, 45 handelt es sich bevorzugt um adaptive Spiegel, mit denen die Strahlcharakteristik des Laserstrahls 1 beeinflussbar ist. Adaptive Spiegel zur Beeinflussung der Strahlcharakteristik eines Laserstrahls sind aus dem Stand der Technik bekannt. Bei solchen adaptiven Spiegeln kann beispielsweise die Oberflächenkrümmung variiert werden, wodurch sich die Strahldivergenz und/oder die Fokuslage eines auf den adaptiven Spiegel auftreffenden Laserstrahls verändern lässt. Die beiden Umlenkspiegel 44, 45 weisen bevorzugt eine elliptische Form auf und ermöglichen dadurch eine Umlenkung des Laserstrahls 1 um 90°. Die beiden adaptiven Umlenkspiegel 44, 45 sind an eine Rechner- und Kontrolleinheit 46 gekoppelt und ihre optische Charakteristik wird von dieser Rechner- und Kontrolleinheit 46 gesteuert.

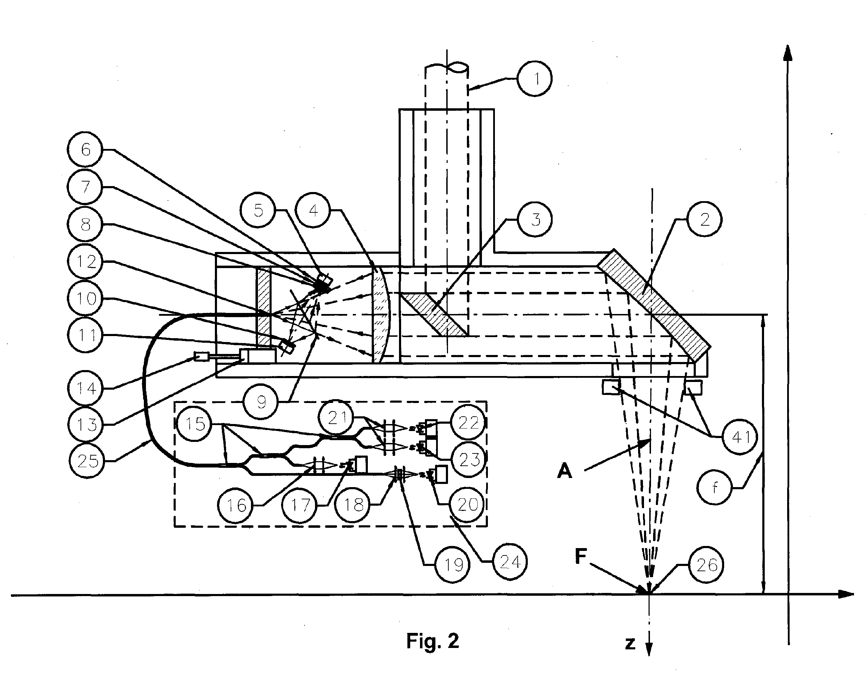

Der von den beiden adaptiven Umlenkspiegeln 44, 45 in eine Einlassöffnung 51 des Bearbeitungskopfes 48 umgelenkte Laserstrahl 1 wird innerhalb des Bearbeitungskopfes 48 von einem ebenen Umlenkspiegel 3 auf ein Fokussierelement 2 mit einer Brennweite f (Figur 2) gelenkt. Bei dem Fokussierelement 2 handelt es sich bevorzugt um einen Fokussierspiegel, der vorzugsweise eine parabolisch (konkav) gekrümmte Metall-Oberfläche aufweist. Alternativ zu einem Fokussierspiegel kann es sich bei dem Fokussierelement auch um eine Linse handeln. Falls der Bearbeitungskopf zum Laserschneiden eingesetzt werden soll ist es jedoch zweckmäßig einen Fokussierspiegel zu verwenden, der - anders als eine Linse - den hohen Strahlleistungen des Laserstrahls 1 stand hält. Der vom Umlenkspiegel 3 auf das Fokussierelement 2 gelenkte Laserstrahl 1 tritt durch eine Laserdüse 50 aus dem Bearbeitungskopf 48 aus und wird von dem Fokussierelement 2 in einen Fokus F fokussiert.

Der Laserdüse 50 gegenüberliegend ist ein zu bearbeitendes Werkstück mit einer Oberfläche 49 angeordnet. Der Bearbeitungskopf 48 ist gegenüber dem zu bearbeitenden Werkstück beweglich angeordnet, so dass der aus der Laserdüse 50 austretende Laserstrahl 1 auf der Oberfläche 49 in lateraler Ebene verschiebbar ist. Weiterhin ist auch der Abstand d zwischen dem Bearbeitungskopf 48 und der Oberfläche 49 des zu bearbeitenden Werkstücks veränderbar. Hierzu ist der Bearbeitungskopf 48 an einen rüttelfreien Antrieb gekoppelt, welcher den Bearbeitungskopf in z-Richtung (also in transversaler Richtung bezüglich der Oberfläche 49 des Werkstücks) bewegen kann. Der aus der Laserdüse 50 austretende und fokussierte Laserstrahl 1 des Bearbeitungslasers trifft in einem Bearbeitungspunkt 26 auf die Oberfläche 49 des zu bearbeitenden Werkstücks. Der effektive Bearbeitungspunkt 26 (als "Tool Center Point", TCP bezeichnet) liegt dabei exakt im Fokus F des Laserstrahls 1. In dem effektiven Bearbeitungspunkt wird das Material des zu bearbeitenden Werkstücks gemäß der vorzunehmenden Bearbeitung erhitzt und ggf. aufgeschmolzen. Der effektive Bearbeitungspunkt 26 kann dabei zweckmäßigerweise genau auf der Oberfläche 49 des zu bearbeitenden Werkstücks liegen. In bestimmten Anwendungsfällen, wie zum Beispiel beim Laserschneiden, kann der effektive Bearbeitungspunkt 26 jedoch auch unterhalb der Oberfläche 49 im Innern des Materials des zu bearbeitenden Werkstücks liegen. Ein solcher Fall ist in dem in Figur 1 zeichnerisch dargestellten Ausführungsbeispiel gezeigt, bei dem der Fokus F unterhalb der Oberfläche 49 und damit im Innern des zu bearbeitenden Werkstücks liegt. Der Fokus F und damit der effektive Bearbeitungspunkt 26 ist gegenüber der Oberfläche 49 um eine Strecke Δh ins Innere des zu bearbeitenden Werkstücks verschoben.

Um die genaue Lage des Fokus F in Bezug auf die Oberfläche 49 des zu bearbeitenden Werkstücks zu ermitteln, ist eine Vorrichtung zur Erfassung des Fokus F des Laserstrahls 1 des Bearbeitungslasers vorgesehen. Die Einzelkomponenten dieser Vorrichtung sind der Darstellung der Figur 2 zu entnehmen. Die Vorrichtung zur Erfassung des Fokus des Laserstrahls 1 umfasst eine erste Justierlichtquelle 22 und eine zweite Justierlichtquelle 23. Diese beiden Justierlichtquellen 22, 23 sind in einer Sende- und Empfangseinheit 24 angeordnet und emittieren jeweils eine schmalbandige elektromagnetische Strahlung, deren Wellenlänge (Zentralwellenlänge des jeweils emittierten Spektrums) unterschiedlich ist. Zweckmäßig handelt es sich bei den beiden Justierlichtquellen 22 und 23 um lichtemittierende Dioden oder um Diodenlaser, vorzugsweise um Diodenlaser, welche eine monochromatische Laserstrahlung emittieren. Die von den beiden Justierlichtquellen 22, 23 emittierte Strahlung wird mittels einer Fasereinkopplungsoptik 21 in Lichtwellenleiter eingekoppelt. Die Lichtwellenleiter, in welche die von den beiden Justierlichtquellen 22, 23 emittierte Strahlung 28, 31 getrennt eingekoppelt worden ist, werden über einen Y-Faserkoppler 15 zusammengeführt, welcher die Strahlung schließlich in einen an den Faserkoppler 15 gekoppelten Lichtwellenleiter 25 leitet. Das freie Ende des Lichtwellenleiters 25 wird in den Bearbeitungskopf 48 geführt und weist einen Austrittsfaserstecker, vorzugsweise des Standardtyps FC-APC auf. Der Faserstecker 12 ist auf einem verfahrbaren Schlitten 13 befestigt, welcher sich innerhalb des Bearbeitungskopfes 48 in axialer Richtung verschieben lässt. An dem Schlitten 13 ist eine Stellschraube 14 zur Fixierung der axialen Position des Schlittens 13 und des daran angeordneten Fasersteckers 12 vorgesehen. In axialem Abstand zum Faserstecker 12 ist eine Linse 4 im Innern des Bearbeitungskopfes 48 angeordnet. Die Linse 4 weist eine chromatische Aberration auf. Die Linse 4 ist bezüglich des Fasersteckers 12 so angeordnet, dass die aus dem Faserstecker 12 austretende Strahlung 28, 31 der beiden Justierlichtquellen 22, 23 entlang der optischen Achse der Linse 4 aus dem Faserstecker 12 austreten und von der Linse 4 als parallele Strahlungsbündel entlang der optischen Achse der Linse 4 geführt werden. Um eine optimale Auskopplung und parallele Strahlführung der von den beiden Justierlichtquellen 22, 23 emittierten Strahlung 28, 31 zu gewährleisten, wird der Faserstecker 12 mittels des Schlittens 13 im Fokus der Linse 4 fixiert.

Die von der Linse 4 kommenden parallelen Strahlenbündel der von den beiden Justierlichtquellen 22, 23 emittierten Strahlung 28, 31 treffen entlang der optischen Achse auf das Fokussierelement 2 und werden von diesem im Fokus F fokussiert. Da die parallelen Strahlen der beiden Justierlichtquellen 22, 23 zwischen der Linse 4 und dem Fokussierelement 2 im Zentrum von dem ebenen Spiegel geblockt werden, wird die von den Justierlichtquellen 22, 23 und 17 emittierte Strahlung 28, 31, 29 ringförmig um den Bearbeitungspunkt 26 herum auf die die Oberfläche 49 des zu bearbeitenden Werkstücks abgebildet. Dadurch kann eine Verfälschung der Reflexion an der Oberfläche vermieden werden, welche auftreten könnte, wenn diese direkt im effektiven Bearbeitungspunkt 26 (TCP) erfolgt.

Die Vorrichtung zur Erfassung des Fokus des Laserstrahls 1 umfasst weiterhin eine erste optische Auskoppeleinrichtung zum Auskoppeln der um den effektiven Bearbeitungspunkt 26 herum durch Streuung und/oder Reflexion des Laserstrahls 1 des Bearbeitungslasers an der Oberfläche 49 des zu bearbeitenden Werkstücks entstehenden elektromagnetischen Strahlung. Die erste optische Auskoppeleinrichtung setzt sich bei dem zeichnerisch in Figur 2 dargestellten Ausführungsbeispiel aus dem optischen Fokussierelement 2, der Linse 4 und einem Strahlteiler 9 zusammen. Der Strahlteiler 9 ist dabei wie in Figur 2 gezeigt im Strahlengang zwischen dem Faserstecker 12 und der Linse 4 schräg zur optischen Achse stehend angeordnet. Die durch Streuung und/oder Reflexion des Laserstrahls 1 des Bearbeitungslasers an der Oberfläche 49 des zu bearbeitenden Werkstücks entstehende elektromagnetische Strahlung wird durch die Laserdüse 50 in den Bearbeitungskopf 48 zurückreflektiert oder gestreut und dort vom Fokussierelement 2 als paralleles Strahlenbündel auf die Linse 4 gerichtet. Der zentrale Bereich des zurückreflektierten oder gestreuten parallelen Strahlenbündels dieser elektromagnetischen Strahlung aus der Wechselwirkungszone (also aus dem effektiven Bearbeitungspunkt, TCP kommende Reflexionen oder Streustrahlen) wird dabei durch den ebenen Spiegel 3 ausgeblendet und kommt nicht im Zentrum der Linse 4 an. Die von der Oberfläche 49 um den effektiven Bearbeitungspunkt 49 herum kommende und in den Bearbeitungskopf 48 zurückreflektierte bzw. gestreute elektromagnetische Strahlung wird daher als Kreisring auf die Linse 4 abgebildet und von dieser fokussiert und von dem Strahlteiler 9 (teilweise) in Richtung auf einen ersten Detektor 5 reflektiert. Der Detektor 5 ist bezüglich des Strahlteilers 9 so angeordnet, dass die von der Linse 4 fokussierte Strahlung aus der Wechselwirkungszone auf die fotosensitive Fläche des Detektors 5 fokussiert wird. Vor dem Detektor 5 ist bevorzugt eine Blende 6 sowie ein erster Filter 7 und ein zweiter Filter 8 angeordnet. Der erste Filter 7 weist bezüglich der vom Bearbeitungslaser emittierten Strahlung 30 ein Bandpassverhalten auf. Bei dem zweiten Filter 8 handelt es sich um einen Graufilter zur Abschwächung der auf den Detektor 5 gerichteten Strahlung aus der Wechselwirkungszone. Mit dem Detektor 5 kann die Intensität der von der Wechselwirkungszone kommenden elektromagnetischen Strahlung erfasst werden, welche dort durch Wechselwirkung des Laserstrahls 1 mit dem zu bearbeitenden Werkstück bzw. durch direkte Rückreflexion oder Streuung des Bearbeitungslaserstrahls entsteht.

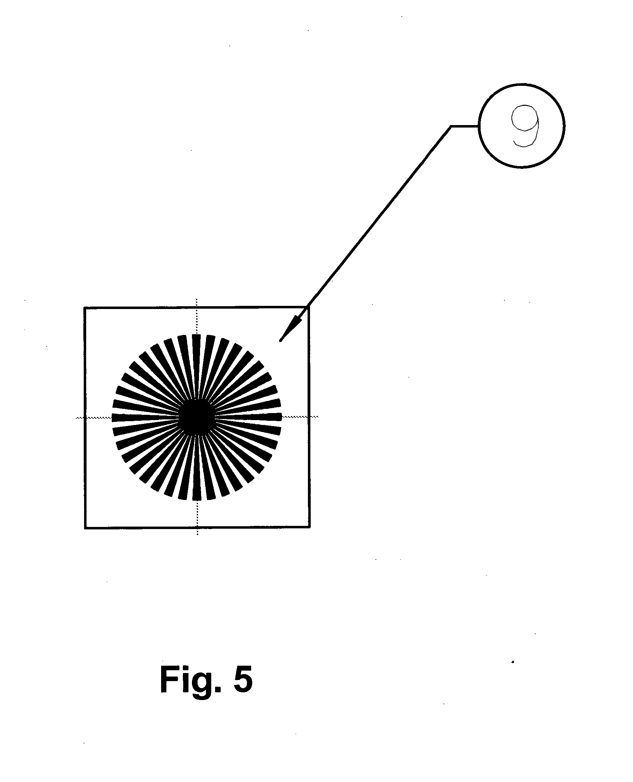

Der in Figur 5 im Detail dargestellte Strahlteiler 9 ist bevorzugt als Strahlteilermaske ausgebildet und kann entweder, wie dort dargestellt, als makroskopische Maske ohne diffraktiven Eigenschaften, oder auch mit einer feineren Struktur, die diffraktive Eigenschaften aufweist, ausgelegt werden. Im ersten, bevorzugten Fall, ist die Funktion der Strahlteilermaske 9 vergleichbar mit der eines 50% - polka-dot-Strahlteilers, bei dem die transparente Trägerplatte des Strahlteilers im Flächenverhältnis von 50% mit metallischen Inseln bedampft ist. Aufgrund der hier gewählten Anordnung wird eine radiale Maskenstruktur bevorzugt, zumal solche Komponenten als Standardkomponenten am Markt erhältlich sind. Außerdem ist die Faseraustrittsfläche im Stecker 12 die wirksame Empfangsapertur des Meßsystems. Die optische Faser im Stecker 12 kann auch als Faserbündel ausgelegt werden. Für den Fall, dass die Strahlteilermaske 9 betont diffraktiv arbeitet, stellt sie die wirksame Empfangsapertur des Meßsystems dar. Die Verwendung von solchen Masken, jedoch als lineare Gitter ausgelegt, sind aus dem Stand der Technik, bspw. der DE10056329 bekannt, wobei dort getrennte Gitter für den Sende- und für den Empfangspfad verwendet werden. Im Unterschied zur Anwendung in der DE 10056329 ist der Strahlengang beim Passieren der Gitter in dem bevorzugten Ausführungsbeispiel der vorliegenden Erfindung divergent, während er in der Anwendung der DE10056329 parallel geformt ist. Die bevorzugt gewählte Strahlteilermaske 9 führt zu einer Verbesserung des Kontrastes der Messsignale, da unscharf abgebildete Bereiche aus der Objektebene von der Strahlteilermaske 9 geblockt werden.

Die Vorrichtung zur Erfassung des Fokus F des Laserstrahls 1 umfasst weiterhin eine zweite Auskoppeleinrichtung zum Auskoppeln der von der Oberfläche 49 des zu bearbeitenden Werkstücks um den effektiven Bearbeitungspunkt 26 herum zurückreflektierten Strahlung der beiden Justierlichtquellen 22, 23. Diese zweite optische Auskoppeleinrichtung besteht aus dem optischen Fokussierelement 2, der Linse 4, dem Faserstecker 12, dem Lichtwellenleiter 25 und einem Y-Faserkoppler 15. Die ringförmig um den Bearbeitungspunkt 26 herum auf die Oberfläche 49 des zu bearbeitenden Werkstücks auftreffende Strahlung 28, 31 der beiden Justierlichtquellen 22, 23 wird von der Oberfläche 49 durch die Laserdüse 50 in den Bearbeitungskopf 48 zurückreflektiert und dort vom Fokussierelement 2 als paralleles Strahlenbündel auf die Linse 4 gelenkt, und von dieser durch den Faserstecker 12, der im Fokus der Linse 4 angeordnet ist, in den Lichtwellenleiter 25 eingekoppelt. Am anderen Ende des Lichtwellenleiters 25 wird die von der Oberfläche 49 zurückreflektierte Strahlung der beiden Justierlichtquellen 22, 23 mittels einer Fokussieroptik 18 aus dem Lichtwellenleiter ausgekoppelt und auf einen zweiten Detektor 20 fokussiert. Vor dem zweiten Detektor 20 ist bevorzugt ein weiterer Filter 19 angeordnet, welcher eine Bandpass-Charakteristik bezüglich der von den beiden Justierlichtquellen 22, 23 emittierten Spektren aufweist. Die beiden Justierlichtquellen 22, 23 werden in ihrer Abstrahlleistung moduliert betrieben. Auf diese Weise ist es möglich, die an der Oberfläche 49 zurückreflektierte Strahlung der Justierlichtquellen 22, 23 der jeweiligen Justierlichtquelle 22 bzw. 23 zuzuordnen. Der Detektor 20 kann daher die Intensitäten der zurückreflektierten Strahlung der Justierlichtquellen 22 und 23 getrennt voneinander erfassen. Hierfür erforderliche Modulationstechniken und die dafür notwendige Kopplung des Detektors 20 an die Modulationssteuerung der Justierlichtquellen 22 und 23 sind aus dem Stand der Technik bekannt. Es eignen sich dafür insbesondere Frequenz-Modulationen, Phasen-Modulationen oder Zeitmultiplex-Modulationen. Auch die Verwendung unterschiedlicher Polarisationszustände der von den Justierlichtquellen 22 und 23 emittierten Strahlen sind zur Modulation geeignet.

Zur Erfassung der Intensitäten der von den beiden Justierlichtquellen 22 und 23 emittierten Strahlung 28, 31 ist im Bereich zwischen dem Faserstecker 12 und der Linse 4 ein weiterer Detektor 11 vorgesehen. Die aus dem Faserstecker 12 austretende Strahlung 28, 31 der beiden Justierlichtquellen 22 und 23 wird an der Rückseite des Strahlteilers 9 (teilweise) reflektiert und auf die lichtempfindliche Fläche des Detektors 11 fokussiert. Der Detektor 11 ist an die Modulationsregelung der beiden Justierlichtquellen 22 und 23 gekoppelt, so dass er die von den Justierlichtquellen 22 und 23 emittierten Strahlen 28, 31 getrennt erfassen kann.

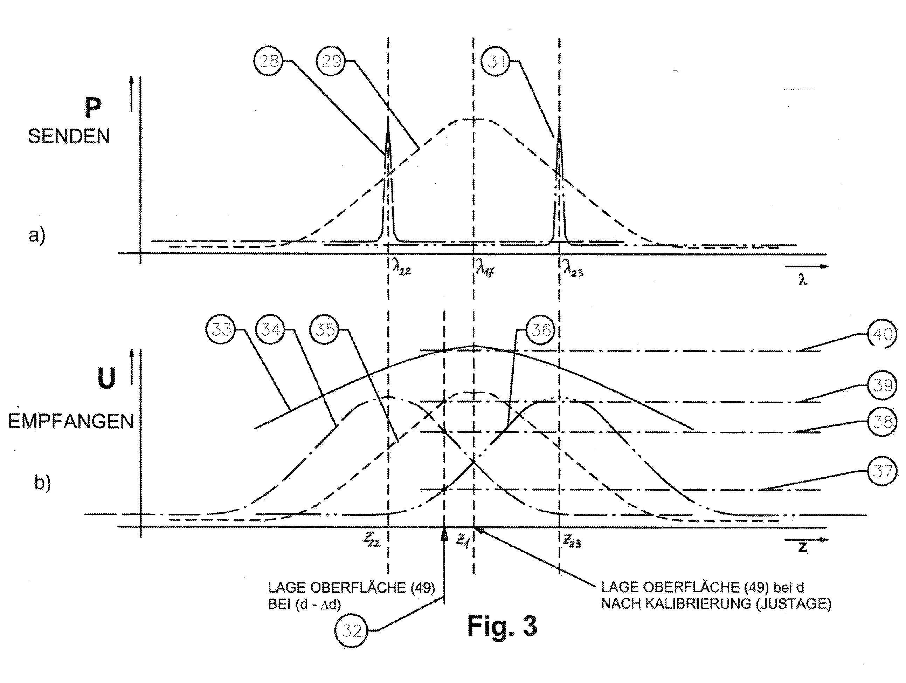

In der Sende- und Empfangseinheit 24 ist bevorzugt noch eine dritte Justierlichtquelle 17 angeordnet, welche vorgesehen ist, um die räumliche Auflösung in z-Richtung im Bereich um die Soll-Position der Brennebene zu erhöhen. Diese dritte Justierlichtquelle 17 emittiert ein bezüglich der Emissionsspektren der beiden anderen Justierlichtquellen 22, 23 relativ breites polychromatisches Abstrahlspektrum 29, dessen Maximum bei einer Zentralwellenlänge $\lambda_{17}$ liegt. Die dritte Justierlichtquelle 17 wird zweckmäßig so ausgewählt, dass die Zentralwellenlänge $\lambda_{17}$ genau oder zumindest ungefähr in der Mitte zwischen den Wellenlängen $\lambda_{22\,bzw.}$ $\lambda_{23}$ der beiden anderen Justierlichtquellen 22 und 23 liegt (Figur 3a). Die von der dritten Justierlichtquelle 17 emittierte Strahlung wird mittels einer Linsenoptik 16 in einen Lichtwellenleiter eingekoppelt und von einem Y-Faserkoppler in den Lichtwellenleiter 25 geführt, in dem auch die Strahlung der beiden anderen Justierlichtquellen 22 und 23 zum Bearbeitungskopf 48 geführt wird.

In Figur 3a sind die von den Justierlichtquellen 17, 22 und 23 emittierten Spektren als Funktion der Intensität über die Wellenlänge aufgetragen. Das Emissionsspektrum der ersten Justierlichtquelle 22 ist darin mit Bezugsziffer 28 und das Emissionsspektrum der zweiten Justierlichtquelle 23 ist mit Bezugsziffer 31 gekennzeichnet und der Intensitätsverlauf des Abstrahlspektrums der dritten Justierlichtquelle 17 ist in Figur 3a mit Bezugsziffer 29 gekennzeichnet. Wie sich aus Figur 3a ergibt, liegt das Emissionsspektrum 28 der ersten Justierlichtquelle 22 auf einer ansteigenden Flanke des breitbandigen Emissionsspektrums der dritten Justierlichtquelle 17 und das schmalbandige Emissionsspektrum 31 der zweiten Justierlichtquelle 23 liegt auf der abfallenden Flanke des breitbandigen Abstrahlspektrums 29 der dritten Justierlichtquelle 17. Die Wellenlängen $\lambda_{17}$, $\lambda_{22}$ und $\lambda_{23}$ liegen zweckmäßig im sichtbaren Spektralbereich.

In Figur 3b sind die von dem Detektor 5 erfassten Intensität der elektromagnetischen Strahlung, welche um den Bearbeitungspunkt 26 herum durch Streuung und/oder Reflexion des Laserstrahls 1 des Bearbeitungslasers an der Oberfläche (49) des zu bearbeitenden Werkstücks entstanden ist, sowie der von dem Detektor 20 erfassten Intensitäten der von den Justierlichtquellen 22 und 23 an der Oberfläche 49 zurückreflektierten Strahlung als Funktion der Lage z des Bearbeitungskopfes 48 bezüglich der Oberfläche 49 des zu bearbeitenden Werkstücks entlang der optischen Achse A des Fokussierelements 2 dargestellt. Bei einer Veränderung des Abstands d des Bearbeitungskopfes 48 bezüglich der Oberfläche 49 entlang der z-Richtung liefert der Detektor 5, welcher die Intensität der vom Bearbeitungslaser an der Oberfläche 49 gestreuten oder reflektierten Strahlung erfasst, die in Figur 3b mit Bezugsziffer 33 gekennzeichnete Hüllkurve. Die dabei vom zweiten Detektor 20 erfassten Intensitäten der von den beiden Justierlichtquellen 22 und 23 an der Oberfläche 49 zurückreflektierten Strahlung sind in Figur 3b in den Hüllkurven 34 und 36 dargestellt, wobei die Hüllkurve 34 der Intensität der von der ersten Justierlichtquelle 22 und die Hüllkurve 36 der von der zweiten Justierlichtquelle 23 zurückreflektierten Strahlung entspricht. Der Versatz der Maxima der beiden Hüllkurven 34 und 36 resultiert aus dem chromatischen Fehler der Linse 4. Die von den Justierlichtquellen 22 und 23 zurückreflektierten Strahlen sind jeweils in zwei Punkten exakt fokussiert, die oberhalb bzw. unterhalb der Werkstückoberfläche 29 liegen. Befindet sich die Werkstückoberfläche 49 exakt in der Brennebene (also im Fokus F) des Fokussierelements 2 sind die Rückreflexe der beiden Justierlichtquellen 22 und 23 unscharf auf dem Detektor 20 abgebildet.

Aus den von den Detektoren 5 und 20 erfassten Intensitäten wird der Abstands d zwischen Werkstückoberfläche 49 und Bearbeitungskopf 48 sowie die relative Verschiebung $\Delta h$ des effektiven Bearbeitungspunkts (TCP) wie folgt ermittelt:

Zunächst erfolgt bei ausgeschaltetem Bearbeitungslaserstrahl 1 eine Justage des Schlitten 13 mit dem darauf angeordneten Faserstecker 12 und des Abstands d zwischen Bearbeitungskopf 48 und der Oberfläche 49, um die Hüllkurven 33 bis 36 der Meßsignale vorzugsweise in der in Figur 3b dargestellten Relativlage einzustellen. Damit wird der Meßbereich des TCP und seine dynamische lastabhängige Verschiebung zwischen den Wellenlängen $\lambda_{22}$ und $\lambda_{23}$ bzw. den zugehörigen und diesen entsprechenden z-Positionen $z_{22}$ und $z_{23}$ fixiert. Die Wellenlängen $\lambda_{22}$ und $\lambda_{23}$ der Justierlichtquellen 22 und 23 stehen durch die getroffene Auswahl fest. Sie werden durch die mecha-nische Justage symmetrisch um $z_1 \sim \lambda_1$ eingestellt. Aufgrund der verwendeten Modulation der Justierlichtquellen 17, 22 und 23 lassen sich die erfaßten Hüllkurven 33-36 der Meßsignale bei einer Änderung des Abstands d zwischen Bearbeitungskopf 48 und der Oberfläche 49 ihrer jeweiligen Quelle (Justierlichtquellen 17, 22 und 23) eindeutig zuordnen. Dafür werden bekannte elektronische und/oder optische Filterungsmethoden verwendet. Aufgrund des hohen optischen Störsignalpegels aus der Wechselwirkungszone um den Bearbeitungspunkt 26 (TCP) während der Laserbearbeitung ist trotzdem mit aleatorischen Schwankungen zu rechnen. Um die Zuverlässigkeit der Messung zu erhöhen, werden die Meßwerte wie folgt gewonnen, wobei nur die wichtigsten Schritte hier beschrieben werden:

Die TCP-Lage vor dem Laserbearbeitungsprozeß entspricht dem eingestellten Abstand d, wobei zu diesem Zeitpunkt (also bei ausgeschaltetem Bearbeitungslaserstrahl 1) die Verschiebung des Bearbeitungspunkts (TCP) $\Delta h = 0$ ist.

$$d \sim \frac{U_{34}}{U_{36}} \,, \qquad\qquad (1.1)$$

wobei $U_{34}$ bzw. $U_{36}$ der vom Detektor 20 momentan erfasste Intensitätswert der Hüllkurve 34 (an der Oberfläche 49 reflektierter Strahl der Justierlichtquelle 22) bzw. der Hüllkurve 36 (an der Oberfläche 49 reflektierter Strahl der Justierlichtquelle 23) ist. Das entspricht auch der Justagebedingung, nach der bei der Koordinate $z = d$ die Hüllkurve 33 des Rückreflexes des Bearbeitungslaserstrahls 1 aus der Wechselwirkungszone ein Maximum aufweisen muß. Dafür wird die Relation (1.1) in die Gleichung:

$$\frac{U_{34}}{U_{33}} = \frac{U_{36}}{U_{33}} \qquad\qquad (1.2)$$

geändert, wobei $U_{33}$ der vom Detektor 5 erfasste Intensitätswert der Hüllkurve 33 (Rückreflexes des Bearbeitungslaserstrahls 1 aus der Wechselwirkungszone) ist.

Dadurch liegt das Maximum der Hüllkurve 33 des Bearbeitungslaserstrahls 1 bei $z_1$ im Bereich zwischen $z_{22}$ und $z_{23}$ (Figur 3b), unter der Voraussetzung, dass die Intensitäten der Emissionsmaxima der Justierlichtquellen 22 und 23 (Maximalwerte der Emissionsspektren 28 und 31, Figur 3a) in etwa gleich groß eingestellt sind. Da die optischen Komponenten 2 und 4 unter der thermischen Last des Bearbeitungslaserstrahls 1 nicht deformiert werden, ist das Verhältnis gemäß (1.1) starr mit dem Bearbeitungskopf 48 verbunden. Bedingt durch den Strahlteiler 9 und durch den Schatten des Spiegels 3 besteht der Brennpunkt aller Lichtquellen außer dem Bearbeitungslaser aus einem oder mehreren Kreissegmenten bzw. aus einem kreisförmigen Kranz von Foki angeordnet um den Bearbeitungspunkt 26 (TCP) auf der Oberfläche 49. Die erste Justierlichtquelle 22 ist bei $z_{22}$ und die zweite Justierlichtquelle 23 bei $z_{23}$ genau fokussiert. Ansonsten sind die Abbildungen bei der jeweiligen Wellenlänge auf der Oberfläche 49 unscharf. Das Licht der polychromatischen dritten Justierlichtquelle 17 hat ihr Intensitätsmaximum auch bei $z_1 \sim \lambda_1$ eingestellt. Die Hüllkurve 35 des Rückreflexes der dritten Justierlichtquelle 17 wird gebildet durch den z-Verlauf der Rückreflexmaxima, die stets der Wellenlänge entsprechend der jeweiligen Lage der Oberfläche 49 ändern. Zur Erhöhung der Auflösung der Messung von d wird das Verhältnis (1.1) mit dem Rückreflex der Justierlichtquelle 22 gefaltet (multipliziert), siehe Term (1.3).

Zur dynamischen Auswertung von $\Delta h$ (also einer insbesondere thermisch bedingten Verschiebung des Bearbeitungspunkts 26) während des Laserbearbeitungsprozesses (also bei eingeschaltetem Bearbeitungslaser) wird die Verschiebung des Signals der Hüllkurve 33 gegenüber der ermittelten Position d des Bearbeitungspunkts 26 (TCP) errechnet. Dafür wird die Differenz oder das Verhältnis der Gleichungsterme aus (1.2) gebildet, während:

$$\frac{U_{34}}{U_{36}} \cdot U_{35} \qquad\qquad (1.3)$$

konstant bleibt.

$$\Delta h \sim \left[ \frac{U_{36}}{U_{33}} - \frac{U_{34}}{U_{33}} \right] \qquad\qquad (1.4)$$

bzw.

$$\Delta h \sim \log \frac{\dfrac{U_{36}}{U_{33}}}{\dfrac{U_{34}}{U_{33}}} = \log (U_{36}/U_{34}) \qquad\qquad (1.5)$$

Auf Grund der zu erwartenden aleatorischen Schwankungen der Signale werden aus den Meßwerten zwei Quotienten gebildet, nämlich $U_{36}/U_{33}$ und $U_{34}/U_{33}$. Jeder der beiden Quotienten für sich würde die Information über $\Delta h$ bereits enthalten, aber die Formel (1.4) oder (1.5) verbessert das Signal-Rausch-Verhältnis. Für $\Delta h = 0$ (d.h. vor der Laserbbearbeitung bei ausgeschaltetem Bearbeitungslaser) wird die mechanische Justage bevorzugt so vorgenommen, dass die beiden genannten Quotienten gleich sind. Unter thermischer Last wird einer der Messwerte (Quotienten) kleiner und der andere größer. Daher ist $\Delta h$ proportional zu der Differenz [Formel (1.4)] bzw. zu dem Verhältnis [Formel (1.5)]. Dabei ist $\Delta h$ in Bezug zum Term (1.3) zu setzen, der dem Abstand d entspricht. Die Werte aus den Gleichungen 1.4 und 1.5 alleine sind in der Regel noch nicht geeignet, die exakte Verschiebung des TCP $\Delta h$ zu berechnen, da der Abstand d zwischen Bearbeitungskopf 48 und Oberfläche 49 sich im Bearbeitungsbetrieb auch verändern kann. Deshalb wird zur Berechnung von $\Delta h$ folgende Relation gebildet:

$$\Delta h \sim \frac{U_{34}}{U_{36}} \cdot U_{35} - \left[ \frac{U_{36}}{U_{33}} - \frac{U_{34}}{U_{33}} \right] \qquad\qquad (1.6)$$

oder

$$\Delta h \sim \frac{U_{34}}{U_{36}} \cdot U_{35} - \frac{\dfrac{U_{36}}{U_{33}}}{\dfrac{U_{34}}{U_{33}}} \qquad\qquad (1.6')$$

d.h. $\Delta h$ ist proportional mit der Differenz (1.3) - (1.4) oder (1.3) - (1.5).
Die vorgeschlagene Auswertemethode stellt nur eine bevorzugte Möglichkeit dar. Andere Auswertemöglichkeiten erschließen sich dem Fachmann.
Zur Verdeutlichung ist in Figur 3b ein Beispiel für eine bestimmte Lage (z-Position) der Oberfläche 49 in Bezug auf den Bearbeitungskopf 48 angegeben. Eine bestimmte z-Position der Oberfläche 49 ist in Figur 3b mit Bezugsziffer 32 angegeben und entspricht einem Abstand der Oberfläche 49 zum Bearbeitungskopf 48 von $z = d-\Delta d$. Die mit den Bezugsziffern 37, 38, 39 und 40 bezeichneten horizontalen Linien (strichpunktierte Linien) zeigen im Schnittpunkt mit den ihr jeweils zugeordneten Hüllkurven 33, 34, 35 und 36 den jeweiligen Messwert der vom jeweiligen Detektor (5 bzw. 20) erfassten Intensität bei dieser z-Lage 32 der Oberfläche 49 an, wobei die horizontale Linie 37 der Hüllkurve 36 (von der zweiten Justierlichtquelle 23 kommend), die horizontale Linie 38 der Hüllkurve 34 (von der ersten Justierlichtquelle 22 kommend), die horizontale Linie 39 der Hüllkurve 35 (von der dritten Justierlichtquelle 17 kommend) und die horizontale Linie 40 der Hüllkurve 33 (von dem Bearbeitungslaser aus der Wechselwirkungszone kommend) zugeordnet ist. Der Schnittpunkt der horizontalen Linie mit der ihr zugeordneten Hüllkurve zeigt jeweils den momentanen Intensitätswert $U_{33}$, $U_{34}$, $U_{35}$, bzw. $U_{36}$ aus der jeweiligen Hüllkurve, der bei der momentanen z-Lage der Oberfläche 49 vom jeweiligen Detektor 5 bzw. 20 gemessen wird.
Bei ausgeschaltetem Bearbeitungslaser (d.h. bei $\Delta h = 0$) und einer (Vor-)Justage, bei der der Abstand d so gewählt wird, dass der Fokus F des Fokussierelements 2 auf der Oberfläche 49 liegt (siehe Figur 3b, Lage der Oberfläche 49 bei $z = d$ nach Justage), haben die Rückreflexe der Justierlichtquellen 22 und 23 die gleiche Intensität, d.h. $U_{34} = U_{36}$ und $U_{34} U_{33} = U_{36} / U_{33}$, wobei $U_{33}$ den maximalen Wert annimmt. Wird der Abstand d vergrößert (bei ausgeschaltetem Bearbeitungslaser) sinkt $U_{33}$ und $U_{34}$, wohingegen sich der messwert $U_{36}$ erhöht. Wird der Bearbeitungslaser bei einer Vorjustage des Fokus F auf der Oberfläche 49 eingeschaltet, ändert sich $\Delta h$ auf einen Wert ungleich Null aufgrund der thermischen Veränderung der Brennweite f des Fokussierelements 2. Dadurch wird der Messwert $U_{33}$ niedriger, während der Quotient $U_{34} / U_{36}$ konstant bleibt.

Da die Meßstrahlung der Justierlichtquellen 17, 22 und 23 auf dem Außenkranz des Fokussierspiegels 2 auftrifft (da der zentrale Bereich durch den Spiegel 3 blockiert wird), wo der Hauptlaserstrahl die Metalloberfläche thermisch nicht deformiert (in der Mitte ist eine meßbare Deformation vorhanden, aber der Spiegel ist in der Regel wassergekühlt und die Deformation aus der Mitte pflanzt sich nicht zum Rand fort), bleibt das Verhältnis $U_{34}/U_{36}$ konstant und ist proportional zu dem eingestellten Abstand d (s. Relation 1.1). Die dritte Justierlichtquelle 17 (also der Faktor $U_{35}$ in obigen Relationen) verbessert nur die Steiltheit der resultierenden Kurve und damit verbessert damit die z-Auflösung.

Aus den von den Detektoren 5 und 20 erfassten Intensitäten werden in der oben beschriebenen Weise der Abstand d zwischen dem Bearbeitungskopf 48 und der Oberfläche 49 des zu bearbeitenden Werkstücks sowie die momentane z-Lage des Fokus F des Laserstrahls 1 (bzw. eine Verschiebung $\Delta h$ gegenüber der ursprünglichen (Anfangs)Justierung) des Bearbeitungslasers ermittelt. Mit den ermittelten Daten kann die Lage des Fokus F in Bezug auf die Oberfläche 49 des zu bearbeitenden Werkstücks auf einen für die vorzunehmende Bearbeitung optimale Lage justiert werden. Hierfür kann zum einen der Abstand d zwischen dem Bearbeitungskopf 48 und der Oberfläche 49 des zu bearbeitenden Werkstücks mittels des Antriebs des Bearbeitungskopfes 48 auf einen gewünschten Wert eingestellt werden. Vor Beginn der Laserbearbeitung kann dafür zunächst bei ausgeschaltetem Bearbeitungslaser über die beiden Justierlichtquellen 22 und 23 der eingestellte Abstand d zwischen dem Bearbeitungskopf 48 und der Oberfläche 49 sowie die Lage des Fokus F bezüglich der Oberfläche 49 ermittelt werden. Falls sich hierbei ergibt, dass der Fokus F bezüglich der Oberfläche 49 nicht im optimalen Bearbeitungspunkt 26 (TCP) liegt, kann entweder der Abstand d durch den Antrieb des Bearbeitungskopfes 49 nachgeregelt oder die Brennweite 27 der Fokussieroptik 2 über die adaptiven Spiegel 44, 45 geändert werden. Nach erfolgter (Vor-)Justage des Fokus F bezüglich der Oberfläche 49 des zu bearbeitenden Werkstücks auf einen gewünschten Bearbeitungspunkt 26 (der exakt auf der Oberfläche 49 oder auch darunter, d.h. im Material des zu bearbeitenden Werkstücks liegen kann) wird der Bearbeitungslaser eingeschaltet und auf volle Strahlleistung gebracht. Läuft der Bearbeitungslaser auf voller Strahlleistung, ändern sich die optischen Charakteristika der Strahlführungskomponenten, insbesondere der Spiegel 2, 3 und 44, 45. Diese durch thermische Effekte hervorgerufenen Änderungen der optischen Charakteristika der Strahlführungskomponenten verändern die Lage des Fokus F in Bezug auf die Oberfläche 49 des zu bearbeitenden Werkstücks und damit die effektive Lage des Bearbeitungspunkts 26 in Bezug auf das Werkstück. Um während des laufenden Bearbeitungsprozesses bei voller Strahlleistung des Laserstrahls 1 des Bearbeitungslasers eine optimale Justierung des Fokus F auf den gewünschten Bearbeitungspunkt 26 zu gewährleisten, wird mittels der Vorrichtung zur Erfassung der Lage des Fokus F zum einen der Abstand d zwischen dem Bearbeitungskopf 48 und der Oberfläche 49 und gleichzeitig die momentane Lage des Fokus F ermittelt. Weicht die Lage des Fokus F vom gewünschten Bearbeitungspunkt 26 ab, kann eine Nachjustierung über eine Änderung der Fokuslage F mittels der adaptiven Spiegel 44, 45 erfolgen. Aufgrund des instantanen Ansprechverhaltens der adaptiven Spiegel 44, 45 kann dies in kürzester Zeit, nämlich im ms-Bereich, erfolgen. Bei einer größeren Verschiebung der momentanen Lage des Fokus F bezüglich des gewünschten Bearbeitungspunkts 26 in Bezug auf die Oberfläche 49 kann zunächst eine (schnelle) Nachjustierung des Fokus F über die adaptiven Spiegel 44, 45 und dann anschließend eine Nachregelung des Abstands d zwischen dem Bearbeitungskopf 48 und der Oberfläche 49 erfolgen, wobei während der Änderung des Abstands d gleichzeitig die Lage des Fokus F wieder über die adaptiven Spiegel 44, 45 zurückgestellt wird.

Um die erforderliche Anpassung der Lage des Fokus F mittels der adaptiven Spiegel 44, 45 vornehmen zu können, ist die Rechner- und Kontrolleinheit 46, welche die Stellung und insbesondere die Krümmung der adaptiven Spiegel 44, 45 regelt, an die Sende- und Empfangseinheit 24 der Vorrichtung zur Erfassung der Lage des Fokus F gekoppelt. Dadurch kann zum einen eine sehr exakte Justierung des Fokus F auf den gewünschten und optimalen Bearbeitungspunkt 26 und zum anderen eine insbesondere durch thermische Effekte erforderliche Nachjustierung der Fokuslage auf schnelle Weise im ms-Bereich erfolgen.

Um die Neigung der Oberfläche 49 des zu bearbeitenden Werkstücks im Bereich des Bearbeitungspunkts 26 (also um den TCP herum) zu bestimmen, sind am Bearbeitungskopf 48 mehrere Neigungsdetektoren 41 oder ein 4Q-Detektor angeordnet. Die Neigungsdetektoren 41 sind dabei auf der Außenseite des Bearbeitungskopfs symmetrisch um die Laserdüse 50 angeordnet. Die Neigungsdetektoren 41 erfassen die aus der Wechselwirkungszone kommende Strahlung. Über die von den Neigungsdetektoren 41 erfassten Intensitäten dieser Strahlung kann die Symmetrie der kreisförmigen oder elliptischen Projektion der Laserstrahlung 1 auf der Oberfläche 49 und daraus eine etwaige Neigung der Oberfläche 49 in Bezug auf den Bearbeitungskopf 48 ermittelt werden.

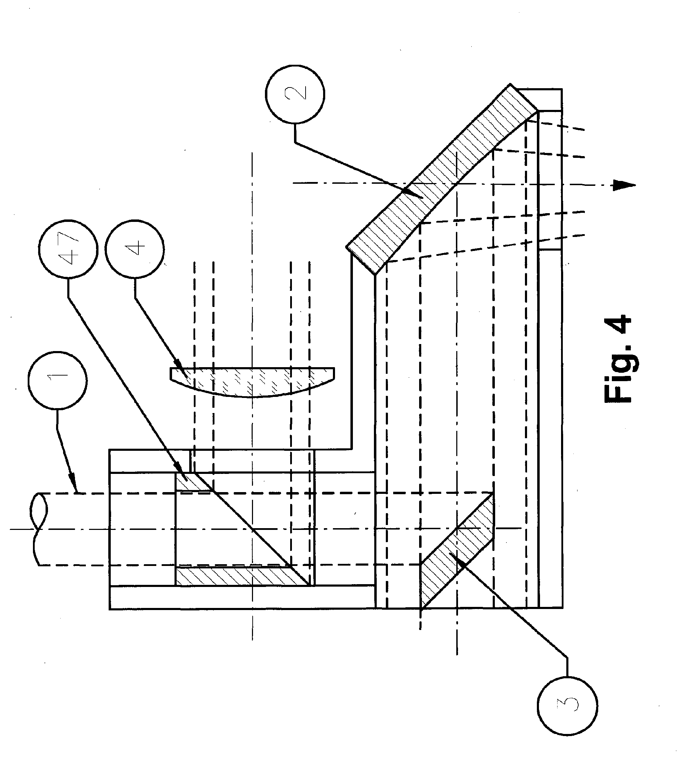

Die Ein- und Auskopplung der Strahlung der Justierlichtquellen 22, 23 und 17 kann auch auf andere Weise erfolgen. In Fig. 4 ist eine alternative Ausführungsform der erfindungsgemäßen Vorrichtung gezeigt. Bei diesem Ausführungsbeispiel erfolgt die Ein- und Auskopplung der Strahlung der Justierlichtquellen 22, 23 und 17 über einen Scraper-Spiegel 47. Solche Scraper-Spiegel sind aus dem Stand der Technik bekannt, zum Beispiel aus der DE 41 06 008 Al.

**Patentansprüche**

1. Verfahren zur Erfassung und Justierung des Fokus (F) eines Laserstrahls bei der Laserbearbeitung von Werkstücken mit folgenden Schritten:

   a.) Zuführung und Fokussierung eines aus einem Bearbeitungskopf (48) austretenden Laserstrahls eines Bearbeitungslasers (1) in einen Bearbeitungspunkt (26) auf oder in Bezug auf die Oberfläche (49) eines zu bearbeitenden Werkstücks, wobei die Fokussierung mittels eines optischen Fokussierelements (2) erfolgt,
   b.) Zuführung und Fokussierung der von wenigstens einer ersten Justierlichtquelle (22) und einer zweiten Justierlichtquelle (23) emittierten Strahlung (28, 31) auf die Oberfläche (49) des zu bearbeitenden Werkstücks, wobei die Wellenlängen der von den Justierlichtquellen (22, 23) emittierten Strahlung unterschiedlich sind,
   c.) Auskoppeln der um den Bearbeitungspunkt (26) herum durch Streuung und/oder Reflexion des Laserstrahls (1) des Bearbeitungslasers an der Oberfläche (49) des zu bearbeitenden Werkstücks entstehenden elektromagnetischen Strahlung mittels eines optischen Systems (2, 4) mit chromatischer Aberration und Erfassen deren Intensität mittels eines ersten Detektors (5),
   d.) Auskoppeln der von der Oberfläche des zu bearbeitenden Werkstück zurück reflektierten Strahlung (34, 36) der Justierlichtquellen (22, 23) mittels des optischen Systems (2, 4) mit chromatischer Aberration und getrenntes Erfassen der Intensitäten der reflektierten Strahlung (34, 36) der Justierlichtquellen (22, 23) mittels wenigstens eines zweiten Detektors (20),
   e.) Ermitteln der Lage des Fokus (F) des Laserstrahls (1) des Bearbeitungslasers unter Verwendung der in den Schritten c.) und d.) erfassten Intensitäten,
   f.) Justieren des Fokus (F) des Laserstrahls (1) des Bearbeitungslasers auf einen gewünschten Bearbeitungspunkt (26) in Bezug auf die Oberfläche (49) des zu bearbeitenden Werkstücks.

2. Verfahren nach Anspruch 1, **dadurch gekennzeichnet, dass** aus den Intensitäten der reflektierten Strahlung (34, 36) der Justierlichtquellen (22, 23) der Abstand (d) zwischen der Oberfläche (49) des zu bearbeitenden Werkstücks und dem Bearbeitungskopf (48) ermittelt wird.

3. Verfahren nach Anspruch 1 oder 2, **dadurch gekennzeichnet, dass** eine dritte Justierlichtquelle (17) mit einem breitbandigen Emissionsspektrum (29) vorgesehen ist, wobei die erste Justierlichtquelle (22) eine Strahlung (28) mit einer Wellenlänge $\lambda_{22}$ emittiert, welche auf einer ansteigenden Flanke des breitbandigen Emissionsspektrums (29) der dritten Justierlichtquelle (17) liegt und dass die zweite Justierlichtquelle (23) eine Strahlung (31) mit einer Wellenlänge $\lambda_{23}$ emittiert, welche auf einer abfallenden Flanke des breitbandigen Emissionsspektrums (29) der dritten Justierlichtquelle (17) liegt.

4. Verfahren nach Anspruch 3, **dadurch gekennzeichnet, dass** das Maximum des breitbandigen Emissionsspektrums (29) der dritten Justierlichtquelle (17) genau oder zumindest ungefähr in der Mitte zwischen den Wellenlängen ($\lambda_{22}$ bzw. $\lambda_{23}$) der beiden anderen Justierlichtquellen (22 und 23) liegt.

5. Verfahren nach einem der voranstehenden Ansprüche, **dadurch gekennzeichnet, dass** zusätzlich zu den Justierlichtquellen (22, 23) eine dritte Justierlichtquelle (17) vorgesehen ist, welche eine breitbandige Strahlung (29) emittiert, die zusammen mit der schmalbandigen Strahlung (28, 31) der ersten und der zweiten Justierlichtquelle (22, 23) auf die Oberfläche (49) des zu bearbeitenden Werkstücks fokussiert und von dort reflektiert wird und deren reflektierte Strahlung (35) mittels des optischen Systems (2, 4) ausgekoppelt und zur Erfassung der reflektierten Intensität dem zweiten Detektor (20) zugeführt wird.

6. Verfahren nach einem der voranstehenden Ansprüche, **dadurch gekennzeichnet, dass** die von den Justierlichtquellen (22, 23; 17) emittierte Strahlung (28, 31; 29) so moduliert wird, dass die von der Oberfläche (49) des zu bearbeitenden Werkstücks reflektierte und vom zweiten Detektor (20) erfasste Strahlung (34, 35; 36) der jeweiligen Justierlichtquelle (22, 23; 17) zugeordnet werden kann.

7. Verfahren nach einem der voranstehenden Ansprüche, **dadurch gekennzeichnet, dass** eine thermisch bedingte Verschiebung $\Delta h$ des Bearbeitungspunkts (26) in Bezug auf die Oberfläche (49) aus den Intensitäten der von der Oberfläche (49) zurück reflektierten Strahlung der Justierlichtquellen (22, 23) und des aus der Wechselwirkungszone kommenden Strahlung des Bearbeitungslasers aus den Relationen

$$\Delta h \; \sim \; \frac{U_{34}}{U_{36}} \cdot U_{35} \; - \left[ \frac{U_{36}}{U_{33}} - \frac{U_{34}}{U_{33}} \right]$$

oder

$$\Delta h \; \sim \; \frac{U_{34}}{U_{36}} \cdot U_{35} \; - \frac{\dfrac{U_{36}}{U_{33}}}{\dfrac{U_{34}}{U_{33}}}$$

ermittelt wird, wobei $U_{33}$ die Intensität des von dem Bearbeitungslaserstrahl (1) aus der Wechselwirkungszone kommende Strahlung (33), $U_{34}$ die Intensität des von der ersten Justierlichtquelle (22) zurück reflektierten Strahlung (34), $U_{36}$ die Intensität des von der zweiten Justierlichtquelle (23) zurück reflektierten Strahlung (35) und $U_{35}$ die Intensität des von der dritten Justierlichtquelle (17) zurück reflektierten Strahlung (35) ist.

8. Verfahren nach einem der voranstehenden Ansprüche, **dadurch gekennzeichnet, dass** der Bearbeitungskopf (48) eine Laserdüse (50) umfasst, aus welcher der Laserstrahl des Bearbeitungslasers (1) austritt und dass symmetrisch um die Laserdüse (50) eine Mehrzahl von Neigungsdetektoren (41) oder ein 4Q-Detektor angeordnet sind, über welche(n) die Neigung der Oberfläche (49) des zu bearbeitenden Werkstücks gegenüber dem Bearbeitungskopf (48) ermittelt werden kann.

9. Verfahren nach einem der voranstehenden Ansprüche, **dadurch gekennzeichnet, dass** die Justierung des Fokus (F) des Laserstrahls des Bearbeitungslasers (1) auf einen gewünschten Bearbeitungspunkt (26) in Bezug auf die Oberfläche (49) des zu bearbeitenden Werkstücks durch eine Änderung der Brennweite (27) des Fokussierelements (2), einer Verschiebung des Fokussierelements (2) gegenüber dem Bearbeitungskopf (48) oder durch eine Änderung des Abstands (d) des Bearbeitungskopfs (48) von der Oberfläche (49) des zu bearbeitenden Werkstücks erfolgt.

10. Vorrichtung zur Erfassung und Justierung des Fokus (F) eines Laserstrahls bei der Laserbearbeitung von Werkstücken mit

- einer optischen Einrichtung (44, 45, 3, 2) zur Zuführung und Fokussierung eines von einem Bearbeitungslaser (46) emittierten Laserstrahls (1), wobei die optische Einrichtung ein in einem Bearbeitungskopf (48) angeordnetes Fokussierelement (2) umfasst, welches den Laserstrahl (1) des Bearbeitungslasers (46) in einen Bearbeitungspunkt (26) auf oder in Bezug auf die Oberfläche (49) eines zu bearbeitenden Werkstücks fokussiert,
- wenigstens einer ersten Justierlichtquelle (22) und einer zweiten Justierlichtquelle (23), welche Strahlung (28, 31) unterschiedlicher Wellenlänge emittieren
- einer optischen Einrichtung (15, 25, 4, 2) zur Zuführung und Fokussierung der von den Justierlichtquellen (22, 23) emittierten Strahlung (28, 31) auf die Oberfläche (49) des zu bearbeitenden Werkstücks,
- einer ersten optischen Auskoppeleinrichtung (2, 4, 9) zum Auskoppeln der um den Bearbeitungspunkt (26) herum durch Streuung und/oder Reflexion des Laserstrahls (1) des Bearbeitungslasers an der Oberfläche (49) des zu bearbeitenden Werkstücks entstehenden elektromagnetischen Strahlung, wobei die erste optische Auskoppeleinrichtung (2, 4, 9) eine chromatische Aberration aufweist,
- einem ersten Detektor (5) zur Erfassung der Intensität der mittels der Auskoppeleinrichtung (2, 4, 9) auf den Detektor (5) gerichteten elektromagnetischen Strahlung, welche um den Bearbeitungspunkt (26) herum durch Streuung und/oder Reflexion des Laserstrahls (1) des Bearbeitungslasers entstanden ist,
- einer zweiten optischen Auskoppeleinrichtung (2, 4, 25, 15) zum Auskoppeln der von der Oberfläche des zu bearbeitenden Werkstück zurück reflektierten Strahlung (34, 36) der Justierlichtquellen (22, 23) wobei die zweite optische Auskoppeleinrichtung (2, 4, 9) eine chromatische Aberration aufweist,
- einem zweiten Detektor (20) zum Erfassen der Intensitäten der reflektierten Strahlung (34, 36) der Justierlichtquellen (22, 23),
- einer Auswerteeinrichtung zur Ermittlung der Lage des Fokus (F) des Laserstrahls (1) des Bearbeitungslasers in Bezug auf die Oberfläche (49) des zu bearbeitenden Werkstücks unter Verwendung der mit den Detektoren (5, 20) erfassten Intensitäten,

- einer Justiereinrichtung zur Justierung des Fokus (F) des Laserstrahls (1) des Bearbeitungslasers (46) auf einen gewünschten Bearbeitungspunkt (26) in Bezug auf die Oberfläche (49) des zu bearbeitenden Werkstücks.

11. Vorrichtung nach Anspruch 10, **dadurch gekennzeichnet, dass** die optische Einrichtung (44, 45, 3, 2) zur Zuführung und Fokussierung des vom Bearbeitungslaser (46) emittierten Laserstrahls (1) wenigstens einen adaptiven Spiegel (44, 45) umfasst, mit dem die Brennweite der optischen Einrichtung (44, 45, 3, 2) und damit die Lage des Fokus (F) variiert werden kann.

12. Vorrichtung nach Anspruch 10 oder 11, **dadurch gekennzeichnet, dass** die optische Einrichtung (15, 25, 4, 2) zur Zuführung und Fokussierung der von den Justierlichtquellen (22, 23) emittierten Strahlung (28, 31) einen oder mehrere Faserkoppler (15), einen Lichtwellenleiter (25), eine Linse (4) sowie das Fokussierelement (2) umfasst.

13. Vorrichtung nach einem der Ansprüche 10 bis 12, **dadurch gekennzeichnet, dass** die erste optische Auskoppeleinrichtung (2, 4, 9) das Fokussierelement (2), eine Linse (4) mit einer chromatischen Aberration und einen Strahlteiler (9) umfasst.

14. Vorrichtung nach einem der Ansprüche 10 bis 13, **dadurch gekennzeichnet, dass** die zweite optische Auskoppeleinrichtung (2, 4, 25, 15) das Fokussierelement (2), eine Linse (4) mit einer chromatischen Aberration, einen Lichtwellenleiter (25) und wenigstens einen Faserkoppler (15) umfasst.

15. Vorrichtung nach einem der Ansprüche 10 bis 14, **dadurch gekennzeichnet, dass** ein dritter Detektor (11) zur Erfassung der Intensität der von den Justierlichtquellen (22, 23) emittierten Strahlung (28, 31) vorgesehen ist.

## Claims

1. Method for detecting and adjusting the focus (F) of a laser beam when laser machining work pieces with the following steps:

   a.) applying and focussing a laser beam of a machining laser (1) emerging from a machining head (48) into a tool centre point (26) on or in relation to the surface (49) of a work piece to be machined, the focussing being effected by means of an optical focussing element (2),

   b.) applying and focussing the radiation (28, 31) emitted from at least a first adjusting light source (22) and a second adjusting light source (23) onto the surface (49) of the work piece to be machined, the wavelengths of the radiation emitted from the adjusting light sources (22, 23) being different,

   c.) coupling out the electromagnetic radiation produced around the tool centre point (26) by scattering and/or reflection of the laser beam (1) of the machining laser at the surface (49) of the work piece to be machined by means of an optical system (2, 4) with chromatic aberration and detecting the intensity thereof by means of a first detector (5),

   d.) coupling out the radiation (34, 36) of the adjusting light sources (22, 23) reflected back from the surface of the work piece to be machined by means of the optical system (2, 4) with chromatic aberration and separately detecting the intensities of the reflected radiation (34, 36) of the adjusting light sources (22, 23) by means of at least a second detector (20),

   e.) determining the position of the focus (F) of the laser beam (1) of the machining laser using the intensities detected in the steps c.) and d.),

   f.) adjusting the focus (F) of the laser beam (1) of the machining laser on a desired tool centre point (26) in relation to the surface (49) of the work piece to be machined.

2. Method according to claim 1, **characterised in that** the distance (d) between the surface (49) of the work piece to be machined and the machining head (48) is determined from the intensities of the reflected radiation (34, 36) of the adjusting light sources (22, 23) .

3. Method according to claim 1 or 2, **characterised in that** a third adjusting light source (17) with a broad-band emission spectrum (29) is provided, the first adjusting light source (22) emitting a radiation (28) with a wavelength $\lambda_{22}$ which lies on a leading edge of the broad-band emission spectrum (29) of the third adjusting light source (17), and **in that** the second adjusting light source (23) emits a radiation (31) with a wavelength $\lambda_{23}$ which lies on a trailing edge of the broad-band emission spectrum (29) of the third adjusting light source (17).

4. Method according to claim 3, **characterised in that** the maximum of the broad-band emission spectrum (29) of the third adjusting light source (17) lies exactly or at least roughly in the middle between the wavelengths ($\lambda_{22}$ and $\lambda_{23}$) of the other two adjusting light sources (22 and 23) .

5. Method according to one of the preceding claims, **characterised in that** in addition to the adjusting light sources (22, 23) a third adjusting light source (17) is provided which emits a broad-band radiation (29) which together with the narrow-band radiation (28, 31) of the first and the second adjusting light source (22, 23) is focussed on the surface (49) of the work piece to be machined and reflected from there and the reflected radiation (35) thereof is coupled out by means of the optical system (2, 4) and fed to the second detector (20) for detection of the reflected intensity.

6. Method according to one of the preceding claims, **characterised in that** the radiation (28, 31; 29) emitted by the adjusting light sources (22, 23; 17) is modulated so that the radiation (34, 35; 36) reflected by the surface (49) of the work piece to be machined and detected by the second detector (20) can be assigned to the respective adjusting light source (22, 23; 17).

7. Method according to one of the preceding claims, **characterised in that** a thermally induced displacement Δh of the tool centre point (26) in relation to the surface (49) is determined from the intensities of the radiation of the adjusting light sources (22, 23) reflected back from the surface (49) and the radiation of the machining laser coming from the zone of interaction using the relations

$$\Delta h \sim \frac{U_{34}}{U_{36}} \cdot U_{35} \left[ \frac{U_{36}}{U_{33}} - \frac{U_{34}}{U_{33}} \right]$$

or

$$\Delta h \sim \frac{U_{34}}{U_{36}} \cdot U_{35} - \frac{\dfrac{U_{33}}{U_{36}}}{\dfrac{U_{34}}{U_{33}}}$$

in which $U_{33}$ is the intensity of the radiation (33) of the machining laser beam (1) coming from the zone of interaction, $U_{34}$ is the intensity of the radiation (34) reflected back from the first adjusting light source (22), $U_{36}$ is the intensity of the radiation (35) reflected back from the second adjusting light source (23) and $U_{35}$ is the intensity of the radiation (35) reflected back from the third adjusting light source (17) .

8. Method according to one of the preceding claims, **characterised in that** the machining head (48) comprises a laser nozzle (50) from which the laser beam of the machining laser (1) emerges, and **in that** a plurality of inclination detectors (41) or a 4Q detector are arranged symmetrically around the laser nozzle (50) by means of which the inclination of the surface (49) of the work piece to be machined in relation to the machining head (48) can be determined.

9. Method according to one of the preceding claims, **characterised in that** the adjustment of the focus (F) of the laser beam of the machining laser (1) on a desired tool centre point (26) in relation to the surface (49) of the work piece to be machined is effected by changing the focal length (27) of the focussing element (2), moving the focussing element (2) in relation to the machining head (48) or by changing the distance (d) of the machining head (48) from the surface (49) of the work piece to be machined.

10. Device for detecting and adjusting the focus (F) of a laser beam when laser machining work pieces with

- an optical system (44, 45, 3, 2) for applying and focussing a laser beam (1) emitted by a machining laser (46), the optical system comprising a focussing element (2) which is arranged in a machining head (48) and focusses the laser beam (1) of the machining laser (46) in a tool centre point (26) or in relation to the surface (49) of a work piece to be machined,

- at least a first adjusting light source (22) and a second adjusting light source (23) which emit radiation (28, 31) of different wavelength,
- an optical system (15, 25, 4, 2) for applying and focussing the radiation (28, 31) emitted by the adjusting light sources (22, 23) on the surface (49) of the work piece to be machined,
- a first optical outcoupling system (2, 4, 9) for coupling out the electromagnetic radiation produced around the tool centre point (26) by scattering and/or reflection of the laser beam (1) of the machining laser at the surface (49) of the work piece to be machined, the first optical outcoupling system (2, 4, 9) exhibiting a chromatic aberration,
- a first detector (5) for detecting the intensity of the electromagnetic radiation produced around the tool centre point (26) by scattering and/or reflection of the laser beam (1) of the machining laser and directed at the detector (5) by means of the outcoupling system (2, 4, 9) ,
- a second optical outcoupling system (2, 4, 25, 15) for coupling out the radiation (34, 36) of the adjusting light sources (22, 23) reflected back from the surface of the work piece to be machined, the second optical outcoupling system (2, 4, 9) exhibiting a chromatic aberration,
- a second detector (20) for detecting the intensities of the reflected radiation (34, 36) of the adjusting light sources (22, 23),
- an evaluating system for determining the position of the focus (F) of the laser beam (1) of the machining laser in relation to the surface (49) of the work piece to be machined using the intensities detected with the detectors (5, 20),
- an adjusting system for adjusting the focus (F) of the laser beam (1) of the machining laser (46) on a desired tool centre point (26) in relation to the surface (49) of the work piece to be machined.

11. Device according to claim 10, **characterised in that** the optical system (44, 45, 3, 2) for applying and focussing the laser beam (1) emitted by the machining laser (46) comprises at least one adaptive mirror (44, 45) with which the focal length of the optical system (44, 45, 3, 2) and hence the position of the focus (F) can be varied.

12. Device according to claim 10 or 11, **characterised in that** the optical system (15, 25, 4, 2) for applying and focussing the radiation (28, 31) emitted by the adjusting light sources (22, 23) comprises one or more fibre couplers (15), a light waveguide (25), a lens (4) and the focussing element (2).

13. Device according to one of claims 10 to 12, **characterised in that** the first optical outcoupling system (2, 4, 9) comprises the focussing element (2), a lens (4) with a chromatic aberration and a beam splitter (9) .

14. Device according to one of claims 10 to 13, **characterised in that** the second optical outcoupling system (2, 4, 25, 15) comprises the focussing element (2), a lens (4) with a chromatic aberration, a light waveguide (25) and at least one fibre coupler (15).

15. Device according to one of claims 10 to 14, **characterised in that** a third detector (11) is provided for detecting the intensity of the radiation (28, 31) emitted by the adjusting light sources (22, 23).

**Revendications**

1. Procédé de détection et d'alignement du foyer (F) d'un faisceau laser, lors de l'usinage au laser de pièces, comportant les étapes suivantes :

a.) amenée et focalisation d'un faisceau laser d'un laser d'usinage (1) émergeant d'une tête d'usinage (48) sur un point d'usinage (26) sur la surface (49) d'une pièce à usiner ou relativement à cette surface, la focalisation étant effectuée au moyen d'un élément de focalisation optique (2),

b.) amenée et focalisation du rayonnement (28, 31), émis par au moins une première source lumineuse d'alignement (22) et une deuxième source lumineuse d'alignement (23), sur la surface (49) de la pièce à usiner, les longueurs d'onde du rayonnement émis par les sources lumineuses d'alignement (22, 23) étant différentes,

c.) découplage du rayonnement électromagnétique, émanant tout autour du point d'usinage (26) par dispersion et/ou réflexion du faisceau laser (1) du laser d'usinage sur la surface (49) de la pièce à usiner, au moyen d'un système optique (2, 4) avec aberration chromatique et détection de son intensité au moyen d'un premier détecteur (5),

d.) découplage du rayonnement (34, 36) des sources lumineuses d'alignement (22, 23) renvoyé par réflexion par la surface de la pièce à usiner au moyen du système optique (2, 4) avec aberration chromatique et détection séparée des intensités du rayonnement réfléchi (34, 36) des sources lumineuses d'alignement (22, 23) au moyen d'au moins un deuxième détecteur (20),

e.) détermination de la position du foyer (F) du faisceau laser (1) du laser d'usinage à l'aide des intensités détectées aux étapes c.) et d.),

f.) alignement du foyer (F) du faisceau laser (1) du laser d'usinage sur un point d'usinage (26) souhaité relativement à la surface (49) de la pièce à usiner.

2. Procédé selon la revendication 1, **caractérisé en ce que** la distance (d) entre la surface (49) de la pièce à usiner et la tête d'usinage (48) est déterminée d'après les intensités du rayonnement réfléchi (34, 36) des sources lumineuses d'alignement (22, 23).

3. Procédé selon la revendication 1 ou 2, **caractérisé en ce qu'**il est prévu une troisième source lumineuse d'alignement (17) ayant un spectre d'émission à large bande (29), la première source lumineuse d'alignement (22) émettant un rayonnement (28) ayant une longueur d'onde $\lambda_{22}$ qui est située sur un flanc montant du spectre d'émission à large bande (29) de la troisième source lumineuse d'alignement (17), et **en ce que** la deuxième source lumineuse d'alignement (23) émet un rayonnement (31) ayant une longueur d'onde $\lambda_{23}$ qui est située sur un flanc descendant du spectre d'émission à large bande (29) de la troisième source lumineuse d'alignement (17).

4. Procédé selon la revendication 3, **caractérisé en ce que** le maximum du spectre d'émission à large bande (29) de la troisième source lumineuse d'alignement (17) est situé précisément ou au moins approximativement au milieu entre les longueurs d'onde ($\lambda_{22}$ ou $\lambda_{23}$) des deux autres sources lumineuses d'alignement (22 et 23).

5. Procédé selon l'une quelconque des revendications précédentes, **caractérisé en ce qu'**il est prévu en plus des sources lumineuses d'alignement (22, 23) une troisième source lumineuse d'alignement (17) qui émet un rayonnement à large bande (29) qui, conjointement avec le rayonnement à bande étroite (28, 31) des première et deuxième sources lumineuses d'alignement (22, 23), est focalisé sur la surface (49) de la pièce à usiner et réfléchi de ladite surface et dont le rayonnement réfléchi (35) est découplé au moyen du système optique (2, 4) et amené au deuxième détecteur (20) à des fins de détection de l'intensité réfléchie.

6. Procédé selon l'une quelconque des revendications précédentes, **caractérisé en ce que** le rayonnement émis (28, 31; 29) par les sources lumineuses d'alignement (22, 23; 17) est modulé de sorte que le rayonnement (34, 35; 36) réfléchi par la surface (49) de la pièce à usiner et détecté par le deuxième détecteur (20) puisse être attribué à la source lumineuse d'alignement respective (22, 23; 17).

7. Procédé selon l'une quelconque des revendications précédentes, **caractérisé en ce qu'**un décalage Δh, d'origine thermique, du point d'usinage (26) relativement à la surface (49) est déterminé d'après les intensités du rayonnement des sources lumineuses d'alignement (22, 23) renvoyé par réflexion de la surface (49) et d'après les intensités du rayonnement du laser d'usinage venant de la zone d'interaction, selon les relations

$$\Delta h \sim \frac{U_{34}}{U_{36}} \cdot U_{35} - \left[ \frac{U_{36}}{U_{33}} - \frac{U_{34}}{U_{33}} \right]$$

ou

$$\Delta h \sim \frac{U_{34}}{U_{36}} \cdot U_{35} - \frac{\dfrac{U_{36}}{U_{33}}}{\dfrac{U_{34}}{U_{33}}}$$

dans lesquelles $U_{33}$ est l'intensité de rayonnement (33) du faisceau laser d'usinage (1) venant de la zone d'interaction, $U_{34}$ est l'intensité du rayonnement (34) renvoyé par réflexion de la première source lumineuse d'alignement (22), $U_{36}$ est l'intensité du rayonnement (35) renvoyé par réflexion de la deuxième source lumineuse d'alignement (23) et $U_{35}$ est l'intensité du rayonnement (35) renvoyé par réflexion de la troisième source lumineuse d'alignement (17).

**8.** Procédé selon l'une quelconque des revendications précédentes, **caractérisé en ce que** la tête d'usinage (48) comprend une buse de laser (50) de laquelle émerge le faisceau laser du laser d'usinage (1) et **en ce que** symétriquement autour de la buse de laser (50) est disposée une pluralité de détecteurs d'inclinaison (41) ou un détecteur à 4 quadrants par le biais duquel ou desquels peut être déterminée l'inclinaison de la surface (49) de la pièce à usiner par rapport à la tête d'usinage (48).

**9.** Procédé selon l'une quelconque des revendications précédentes, **caractérisé en ce que** l'alignement du foyer (F) du faisceau laser du laser d'usinage (1) sur un point d'usinage (26) souhaité relativement à la surface (49) de la pièce à usiner est effectué par une modification de la distance focale (27) de l'élément de focalisation (2), d'un décalage de l'élément de focalisation (2) par rapport à la tête d'usinage (48) ou par une modification de la distance (d) de la tête d'usinage (48) à la surface (49) de la pièce à usiner.

**10.** Dispositif de détection et d'alignement du foyer (F) d'un faisceau laser lors de l'usinage au laser de pièces, comportant :

- une installation optique (44, 45, 3, 2) servant à l'amenée et à la focalisation d'un faisceau laser (1) émis par un laser d'usinage (46), l'installation optique comprenant un élément de focalisation (2), disposé dans une tête d'usinage (48), lequel élément focalise le faisceau laser (1) du laser d'usinage (46) sur un point d'usinage (26) sur la surface (49) d'une pièce à usiner ou relativement à cette surface,
- au moins une première source lumineuse d'alignement (22) et une deuxième source lumineuse d'alignement (23) qui émettent un rayonnement (28, 31) de longueur d'onde différente,
- une installation optique (15, 25, 4, 2) servant à l'amenée et à la focalisation du rayonnement (28, 31), émis par les sources lumineuses d'alignement (22, 23), sur la surface (49) de la pièce à usiner,
- une première installation de découplage optique (2, 4, 9) servant au découplage du rayonnement électromagnétique, émanant tout autour du point d'usinage (26) par dispersion et/ou réflexion du faisceau laser (1) du laser d'usinage sur la surface (49) de la pièce à usiner, la première installation de découplage optique (2, 4, 9) présentant une aberration chromatique,
- un premier détecteur (5) servant à la détection de l'intensité du rayonnement électromagnétique qui est dirigé sur le détecteur (5) au moyen de l'installation de découplage (2, 4, 9) et qui émane tout autour du point d'usinage (26) par dispersion et/ou réflexion du faisceau laser (1) du laser d'usinage,
- une seconde installation de découplage optique (2, 4, 25, 15) servant au découplage du rayonnement (34, 36) des sources lumineuses d'alignement (22, 23) renvoyé par réflexion par la surface de la pièce à usiner, la seconde installation de découplage optique (2, 4, 9) présentant une aberration chromatique,
- un deuxième détecteur (20) servant à la détection des intensités du rayonnement réfléchi (34, 36) des sources lumineuses d'alignement (22, 23),
- une installation d'évaluation servant à la détermination de la position du foyer (F) du faisceau laser (1) du laser d'usinage relativement à la surface (49) de la pièce à usiner à l'aide des intensités détectées par les détecteurs (5, 20),
- une installation d'alignement servant à l'alignement du foyer (F) du faisceau laser (1) du laser d'usinage (46) sur un point d'usinage (26) souhaité relativement à la surface (49) de la pièce à usiner.

**11.** Dispositif selon la revendication 10, **caractérisé en ce que** l'installation optique (44, 45, 3, 2) servant à l'amenée et à la focalisation du faisceau laser (1) émis par le laser d'usinage (46) comprend au moins un miroir adaptatif (44, 45) avec lequel on peut varier la distance focale de l'installation optique (44, 45, 3, 2) et donc la position du foyer (F).

**12.** Dispositif selon la revendication 10 ou 11, **caractérisé en ce que** l'installation optique (15, 25, 4, 2) servant à l'amenée et à la focalisation du rayonnement (28, 31) émis par les sources lumineuses d'alignement (22, 23) comprend un ou plusieurs coupleurs de fibre optique (15), un câble à fibres optiques (25), une lentille (4), ainsi que l'élément de focalisation (2).

**13.** Dispositif selon l'une quelconque des revendications 10 à 12, **caractérisé en ce que** la première installation de découplage optique (2, 4, 9) comprend l'élément de focalisation (2), une lentille (4) avec une aberration chromatique et un séparateur de faisceau (9).

**14.** Dispositif selon l'une quelconque des revendications 10 à 13, **caractérisé en ce que** la seconde installation de découplage optique (2, 4, 25, 15) comprend l'élément de focalisation (2), une lentille (4) avec une aberration chromatique, un câble à fibres optiques (25) et au moins un coupleur de fibre optique (15).

**15.** Dispositif selon l'une quelconque des revendications 10 à 14, **caractérisé en ce qu'**est prévu un troisième détecteur (11) servant à la détection de l'intensité du rayonnement (28, 31) émis par les sources lumineuses d'alignement (22, 23).

Fig. 1

**Fig. 2**

**Fig. 3**

a) P SENDEN

b) U EMPFANGEN

LAGE OBERFLÄCHE (49) BEI (d - Δd)

LAGE OBERFLÄCHE (49) bei d NACH KALIBRIERUNG (JUSTAGE)

EP 2 516 101 B1

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1908544 A2
- DE 10248458 B4
- DE 10056329
- DE 4106008 A1